# EUROPÄISCHE PATENTSCHRIFT

(11) **EP 1 059 179 B1**
(45) Veröffentlichungstag und Bekanntmachung des Hinweises auf die Patenterteilung: **24.04.2002**
(21) Anmeldenummer: 00111760.5
(22) Anmeldetag: 03.06.2000
(51) Int. Cl.: B60H 1/00

(54) **Betätigungsvorrichtung**
Actuating device
Dispositif d'actionnement

(30) Priorität: 11.06.1999 DE 19926652
(43) Veröffentlichungstag der Anmeldung: 13.12.2000
(73) Patentinhaber: ADAM OPEL AG, 65423 Rüsselsheim (DE)
(72) Erfinder: Jordan, Frank, Dipl.-Physiker, 65428 Rüsselsheim (DE)
(74) Vertreter: Kümpfel, Heinz, Dipl.-Ing.

(56) Entgegenhaltungen:
- EP-A- 0 053 394
- DE-C- 19 636 210
- PATENT ABSTRACTS OF JAPAN vol. 004, no. 099 (M-021), 16. Juli 1980 (1980-07-16) & JP 55 059013 A (DIESEL KIKI CO LTD), 2. Mai 1980 (1980-05-02)

## Beschreibung

Die Erfindung bezieht sich auf eine Vorrichtung mit denen im Oberbegriff des Patentanspruchs 1 angegebenen Merkmalen. Aus EP 0 053 394 B1 ist es bekannt, die Belüftung des Fahrgastinnenraumes mittels eines drei Schalter beinhaltenden Betätigungsorgans umzustellen zwischen einer Betriebsart mit Frischluftzufuhr und einem Umluftbetrieb, was manuell und in einem Automatikmodus erfolgen kann.

In der Praxis ist zum Ein-/Ausschalten des Automatikmodus entweder eine separate Taste vorgesehen (Mercedes E-Klasse), was aufwendig ist, oder die drei möglichen Betriebszustände (Frischluft ein, Umluft ein, Automatikmodus ein) werden an einem Bedienelement nacheinander durchgeschaltet (BMW 5er), was als bedienerunfreundlich empfunden wird. Eine mehrmalige Tasterbetätigung ist erforderlich, wobei eine Anzeige, die den eingestellten Modus signalisiert, zu beobachten ist.

Es ist Aufgabe der Erfindung, eine Vorrichtung der genannten Art zu schaffen, mit einer bedienungsfreundlichen Einstellbarkeit der drei genannten Betriebszustände der Belüftungsanlage, die mit geringem Aufwand zu gewährleisten ist.

Zur Lösung dieser Aufgabe zeichnet sich die Vorrichtung durch die im Anspruch 1 angegebenen Merkmale aus. Bezüglich der Anzeige der gewählten Betriebsart wird auf Anspruch 2 verwiesen.

Die Umschaltung zwischen Frischluftzufuhr und Umluftbetrieb sowie die Einstellung des Automatikmodus (automatische Wahl von Frischluft/Umluft in Abhängigkeit von Betriebs-/Umweltparametern) erfolgt mit nur einem als Taster ausgebildeten Bedienelement. Dieser Taster schaltet bei normaler Betätigung um zwischen Frischluftzufuhr und Umluftbetrieb, dient also zur manuellen Einstellung entsprechend des Fahrerwunsches. Wird der Schalter jedoch durch einen von der Computermouse her bekannten Doppelklick betätigt, führt dies zur Einstellung des Automatikmodus. Der Automatikmodus wird also durch zweimalige schnelle Betätigung innerhalb eines eng begrenzten Zeitfensters eingestellt.

Bei dieser Art der Einstellung der Belüftungsvorrichtung ist der Aufwand gering, da nur ein Taster vorzusehen ist. Die jeweils gewünschte Betriebsart ist durch nur eine bestimmte Betätigungshandlung einstellbar, ohne daß eine Anzeige beobachtet werden muß. Eine vorhandene Anzeige, die in einem zentralen Display oder auch nahe des beschriebenen Tasters angeordnet sein kann, sollte aus zwei Anzeigeelementen bestehen. Damit ist der eingestellte Umluftbetrieb bzw. die eingestellte Automatikbetriebsart signalisierbar. Diese Anzeigeelemente müssen bei der Einstellung nicht beobachtet werden, sondern dienen ausschließlich der späteren Kontrolle, falls der Fahrer im Unklaren über den aktuell gewählten Modus ist.

## Patentansprüche

1. Vorrichtung zur Belüftung des Innenraumes eines Kraftfahrzeugs mit Mitteln zum manuellen und automatischen Verstellen zwischen Frischluftzufuhr und Umluftbetrieb und mit einem Bedienelement, an dem manuell zwischen Frischluftzufuhr und Umluftbetrieb gewählt werden kann und an dem der Automatikmodus einstellbar ist, **dadurch gekennzeichnet, daß** das Bedienelement ein Taster ist und der Automatikmodus durch Doppelklick auf diesen Taster innerhalb eines eng begrenzten Zeitfensters einstellbar ist, wo hingegen bei einfachem Druck auf den Taster eine manuelle Umschaltung zwischen Frischluftzufuhr und Umluftbetrieb erfolgt.

2. Vorrichtung nach Anspruch 1, **gekennzeichnet durch** zwei Anzeigeelemente, die einerseits den aktivierten Automatikmodus und andererseits den manuell aktivierten Umluftbetrieb signalisieren.

## Claims

1. Apparatus for ventilating the interior of a motor vehicle with means for manual and automatic adjustment between fresh air supply and circulating air mode and with an operating element at which a choice can be made manually between fresh air supply and circulating air mode and at which the automatic mode can be set, **characterised in that** the operating element is a push button and the automatic mode can be set by double clicking on this push button within a narrowly limited time window, whereas, on pressing on the push button once, manual switching between fresh air supply and circulating air mode is effected.

2. Apparatus according to claim 1, **characterised by** two indicator elements which signal on the one hand the activated automatic mode and on the other hand the manually activated circulating air mode.

## Revendications

1. Dispositif pour la ventilation de l'habitacle d'un véhicule automobile comportant des moyens pour la commutation manuelle et automatique entre l'alimentation en air frais et le fonctionnement en recyclage ainsi qu'un élément de commande, à l'aide duquel on peut choisir entre l'alimentation en air frais et le fonctionnement en recyclage et à l'aide duquel le mode automatique peut être sélectionné, **caractérisé en ce que** l'élément de commande est une touche et le mode automatique peut être sélectionné par un « doucle-clic » sur ladite touche, à l'intérieur d'une fenêtre de temps limitée, tandis qu'avec une pression simple sur la touche on opère une commutation entre l'alimentation en air frais et le fonctionnement en recyclage.

2. Dispositif selon la revendication 1, **caractérisé par** deux éléments d'affichage qui indiquent d'une part l'activation du mode automatique et d'autre part l'activation du fonctionnement en recyclage.
